# EUROPEAN PATENT APPLICATION

(11) **EP 4 672 173 A1**
(43) Date of publication of application: **31.12.2025**
(21) Application number: 25185227.3
(22) Date of filing: 25.06.2025
(51) Int. Cl.: G06V 10/80, G06V 20/56, G06V 20/58

(54) **METHOD AND APPARATUS FOR DETERMINING PERCEPTION RESULT, MEDIUM, AND DEVICE**

(30) Priority: 26.06.2024 CN 202410841256
(71) Applicant: Beijing Horizon Information Technology Co., Ltd., Beijing 100094 (CN)
(72) Inventor: SHI, Yue, Beijing, 100094 (CN); LIN, Jinbin, Beijing, 100094 (CN)
(74) Representative: Patentanwälte Magenbauer & Kollegen Partnerschaft mbB

(57) **Abstract**

Disclosed in embodiments of this disclosure are a method and apparatus for determining a perception result, a medium, and a device. The method includes: determining a first image captured by a wide-angle camera and a second image captured by a narrow-angle camera, where a field of view (FOV) of the narrow-angle camera is smaller than a FOV of the wide-angle camera; determining, based on the first image, the second image, and perception task models corresponding to distance ranges, first perception results corresponding to distance ranges; and determining an object perception result based on the first perception results corresponding to distance ranges.

## Description

### FIELD OF THE INVENTION

This disclosure relates to computer vision technology, and in particular, to a method and apparatus for determining a perception result, a medium, and a device.

### BACKGROUND OF THE INVENTION

In advanced driver assistance systems (ADAS), generally, objects at various distances in front of a vehicle are to be identified. In related art, generally, multi-scale features are extracted based on a high-resolution image, and objects within various distance segments are identified based on the multi-scale features. However, multi-scale feature extraction and object identification easily leads to greater computing power of a perception task model, which is not conducive to deploying the model in an in-vehicle terminal, and a low recall rate for a distant-range object.

### SUMMARY OF THE INVENTION

Embodiments of this disclosure provide a method and apparatus for determining a perception result, a medium, and a device, capable of lowering computing power for a perception task model, improving a recall rate for a distant-range object.

A first aspect of this disclosure provide a method for determining a perception result, including: determining a first image captured by a wide-angle camera and a second image captured by a narrow-angle camera, where a field of view (FOV) of the narrow-angle camera is smaller than a FOV of the wide-angle camera; determining, based on the first image, the second image, and perception task models corresponding to distance ranges, first perception results corresponding to distance ranges; and determining an object perception result based on the first perception results corresponding to distance ranges.

A second aspect of this disclosure provide an apparatus for determining a perception result, including: a first processing module, configured to determine a first image captured by a wide-angle camera and a second image captured by a narrow-angle camera, where a field of view (FOV) of the narrow-angle camera is smaller than a FOV of the wide-angle camera; a second processing module, configured to determine, based on the first image, the second image, and perception task models corresponding to distance ranges, first perception results corresponding to distance ranges; and a third processing module, configured to determine an object perception result based on the first perception results corresponding to distance ranges.

A third aspect of this disclosure provides a non-transitory computer readable storage medium, on which a computer program is stored, wherein the computer program, when executed by a processor, causes the processor to implement the method for determining a perception result according to any one of embodiments of this disclosure.

A fourth aspect of this disclosure provides an electronic device, including: a processor; and a memory configured to store processor-executable instructions. The processor is configured to read the executable instructions from the memory, and execute the instructions to implement the method for determining a perception result according to any one of embodiments of this disclosure.

A fifth aspect of this disclosure provides a computer program product, instructions in the computer program product, when executed by a processor, causes the processor to implement the method for determining a perception result according to any one of embodiments of this disclosure is implemented.

Based on a method and apparatus for determining a perception result, a medium, and a device according to embodiments of this disclosure, object perception within the different distance ranges is implemented based on the wide-angle image (first image) captured by the wide-angle camera and the narrow-angle image (second image) captured by the narrow-angle camera, in combination with the perception task models for the different distance ranges, to obtain first perception results corresponding respectively to the distance ranges, and then the object perception result is determined based on the first perception results for the distance ranges. As the wide-angle camera has a higher perception precision for a close-range object, and the narrow-angle camera has a higher perception precision for a distant-range object, close-range and distant-range objects within a full distance segment may be covered using the wide-angle image and the narrow-angle image, and then accurate recall for objects within a full distance range may be implemented in conjunction with perception task models for different distance ranges, where a recall rate for the distant-range object may be improved greatly while guaranteeing a recall rate for the close-range object. And, performing perception for objects within the different distance ranges by the perception task models for the different distance ranges may be independent of extraction of multi-scale features of a high-resolution image, thereby effectively lowering computing power for a perception task model and facilitating deployment of the model in a terminal.

### BRIEF DESCRIPTION OF THE DRAWINGS

FIG. 1 is an exemplary scenario of application of a method for determining a perception result according to this disclosure.
FIG. 2 is a flowchart of a method for determining a perception result according to an exemplary embodiment of this disclosure.
FIG. 3 is a flowchart of a method for determining a perception result according to another exemplary embodiment of this disclosure.
FIG. 4 is a flowchart of a method for determining a perception result according to yet another exemplary embodiment of this disclosure.
FIG. 5 is a flowchart of a method for determining a perception result according to still another exemplary embodiment of this disclosure.
FIG. 6 is a flowchart of a method for determining a perception result according to yet another exemplary embodiment of this disclosure.
FIG. 7 is a flowchart of determining a perception result according to an exemplary embodiment of this disclosure.
FIG. 8 is a schematic diagram illustrating a principle for cropping an input image corresponding to a perception task model D according to an exemplary embodiment of this disclosure.
FIG. 9 is a schematic diagram illustrating a principle for cropping an input image corresponding to a perception task model E according to an exemplary embodiment of this disclosure.
FIG. 10 is a schematic diagram illustrating a principle for cropping an input image corresponding to a perception task model F according to an exemplary embodiment of this disclosure.
FIG. 11 is a schematic diagram illustrating a structure of an apparatus for determining a perception result according to an exemplary embodiment of this disclosure.
FIG. 12 is a schematic diagram illustrating a structure of an apparatus for determining a perception result according to another exemplary embodiment of this disclosure.
FIG. 13 is a schematic diagram illustrating a structure of an apparatus for determining a perception result according to yet another exemplary embodiment of this disclosure.
FIG. 14 is a schematic diagram illustrating a structure of an electronic device according to embodiments of this disclosure.

### DETAILED DESCRIPTION OF THE EMBODIMENTS

To explain this disclosure, exemplary embodiments of this disclosure are described below with reference to accompanying drawings. Clearly, the embodiments described are merely some, rather than all, of embodiments of this disclosure. It should be understood that this disclosure is not limited to the exemplary embodiments.

It should be noted that unless otherwise specified, the scope of this disclosure is not limited to relative arrangements, numeric expressions, and numerical values of components and steps described in these embodiments.

### Overview of Disclosure

In implementing this disclosure, the inventor discovers that in advanced driver assistance systems (ADAS), generally, objects at various distances in front of a vehicle are to be identified. In related art, generally, multi-scale features are extracted based on a high-resolution image, and objects within various distance segments are identified based on the multi-scale features. However, performing of multi-scale feature extraction and object identification based on a high-resolution image easily leads to a complex network structure of a perception task model, so that the perception task model has greater computing power, which is not conducive to deploying the model in an in-vehicle terminal. And, the image on which related art is based is typically a wide-angle image captured by a camera of a great FOV, where for a wide-angle image, there is a high recall rate for a close-range object, but a low recall rate for an object at a long distance.

### Exemplary Overview

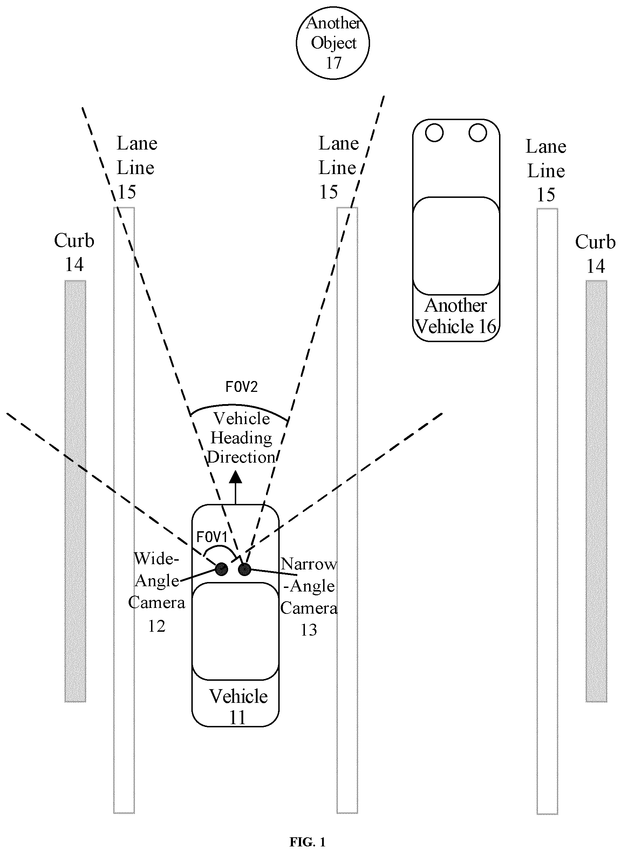

FIG. 1 is an exemplary scenario of application of a method for determining a perception result according to this disclosure. As shown in FIG. 1, while a vehicle 11 drives on a road, a wide-angle image (referred to as a first image) in front of the vehicle 11 may be captured using a wide-angle camera 12 on the vehicle 11, and a narrow-angle image (referred to as a second image) in front of the vehicle 11 may be captured using a narrow-angle camera 13. A field of view (FOV) of the wide-angle camera 12 is greater than a FOV of the narrow-angle camera 13, i.e., FOV1 is greater than FOV2 in the figure. For example, FOV1 may be 120 degree, and FOV2 may be 30 degree. The wide-angle camera 12 and the narrow-angle camera 13 have overlapping coverage regions, such that the narrow-angle camera 13 may assist the wide-angle camera 12 in improving a recall rate for a long-distant object. An object to be perceived may include but is not limited to a curb 14, a lane line 15, another vehicle 16, another object 17, etc., in front of the vehicle 11. The another object 17 for example may include a pedestrian, a cyclist, a traffic light, a signboard, a traffic cone, a ground arrow, a crosswalk, a stop line, etc. Using the method for determining a perception result according to this disclosure, in case the first image captured by the wide-angle camera 12 and the second image captured by the narrow-angle camera 13 are determined, a first perception result corresponding to a distance range may be determined based on the first image, the second image, and a perception task model corresponding to distance range; and an object perception result may be determined based on the first perception results corresponding to distance ranges. As the wide-angle camera 12 has a higher perception precision for a close-range object, and the narrow-angle camera has a higher perception precision for a distant-range object, close-range and distant-range objects within a full distance segment may be covered using the wide-angle image and the narrow-angle image, and then accurate recall for objects within a full distance range may be implemented in conjunction with perception task models for different distance ranges, where a recall rate for the distant-range object may be improved greatly while guaranteeing a recall rate for the close-range object. And, performing perception for objects within the different distance ranges by the perception task models for the different distance ranges may be independent of extraction of multi-scale features of a high-resolution image, thereby effectively lowering computing power for a perception task model and facilitating deployment of the model in a terminal. The method for determining a perception result according to this disclosure is not limited to use in a field or scenario of intelligent driving, and further is applicable to another field or scenario, such as field of security monitoring.

### Exemplary Method

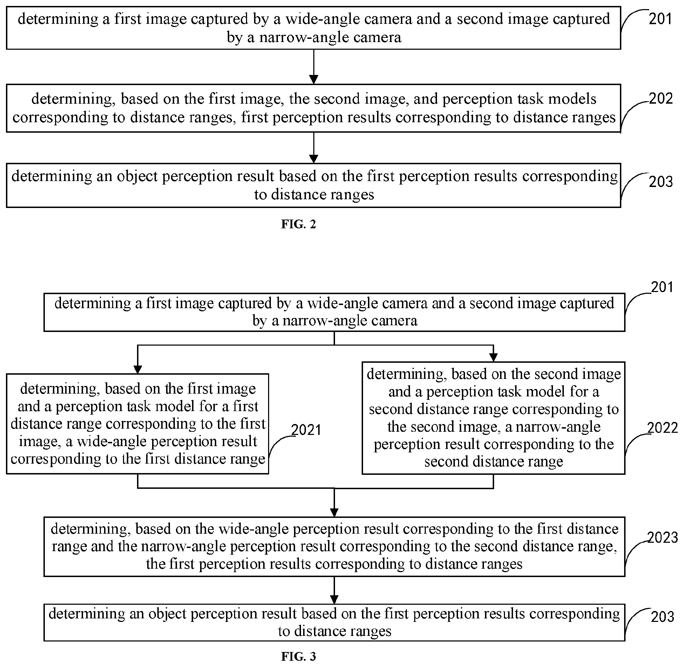

FIG. 2 is a flowchart of a method for determining a perception result according to an exemplary embodiment of this disclosure. This embodiment is applicable to an electronic device, specifically to an in-vehicle computing platform, for example, and as shown in FIG. 2, includes steps as follows.

Step 201, Determining a first image captured by a wide-angle camera and a second image captured by a narrow-angle camera.

A field of view (FOV) of the narrow-angle camera is smaller than a FOV of the wide-angle camera, as shown in FIG. 1. There is an overlap region between view ranges of the wide-angle camera and the narrow-angle camera. For example, the wide-angle camera and the narrow-angle camera each are a forward-view camera, configured to perceive an object in front of a vehicle. The object for example may include a curb, a lane line, another vehicle, a pedestrian, a cyclist, a traffic light, a signboard, a ground sign, etc. The first image captured by the wide-angle camera is an image corresponding to a range visible to the wide-angle camera, i.e., a wide-angle image. The second image captured by the narrow-angle camera is an image corresponding to a range visible to the narrow-angle camera, i.e., a narrow-angle image.

Step 202, Determining, based on the first image, the second image, and perception task models corresponding to distance ranges, first perception results corresponding to distance ranges

The distance range may include one or more distance ranges. Each distance range may correspond to one or more perception task models. That is, a number of perception task models corresponding to each distance range may be one or more. Through performing object perception processing by perception task models corresponding to different distance ranges, the first perception results corresponding respectively to the distance ranges may be obtained. The first perception result may include one or more perception results corresponding respectively to one or more types of objects. For each type, there may be one or more objects. A perception result corresponding to each type of objects may include perception results for respective ones of the type of objects. A perception result for each object may include an object detection result, a semantic segmentation result, etc. A task type involved in a specific perception result may be set as needed, and is not limited in embodiments of this disclosure.

In some optional embodiments, to cover a full distance range in front of the vehicle, the distance range generally includes a plurality of distance ranges. For example, for the wide-angle first image, at least one perception task model for at least one distance range (referred to as first distance range) may be set. For the narrow-angle second image, at least one perception task model for at least one distance range (referred to as second distance range) may be set.

In some optional embodiments, any one distance range may include at least one distance range corresponding respectively to one or more objects. For example, taking the wide-angle camera as an example, a distance range *a* corresponds to a perception task model A. If the perception task model A is a multi-task perception model, by which a plurality of objects may be perceived at the same time, the perception task model A has different effective perception distance ranges for different objects, where the distance range *a* includes the distance ranges for the different objects. For example, a vehicle (another vehicle around an ego vehicle) within a range of 0 to 55 meters (m) may be perceived effectively by the perception task model A; a pedestrian or a cyclist within a range of 0 to 21 meters may be perceived effectively by the perception task model A; and a traffic light within a range of 0 to 28 meters may be perceived effectively by the perception task model A, etc. That is, the distance range *a* includes the range of 0 to 55 meters for another vehicle, the range of 0 to 21 meters for a pedestrian or a cyclist, and the range of 0 to 28 meters for a traffic light. As another example, by a perception task model B, another vehicle within a range of 55 to 110 meters, a pedestrian or a cyclist within a range of 21 to 43 meters, a traffic light within a range of 28 to 57 meters, etc., may be perceived effectively. By a perception task model C, another vehicle within a range of 110 to 220 meters, a pedestrian or a cyclist within a range of 43 to 87 meters, a traffic light within a range of 57 to 114 meters, etc., may be perceived effectively. In short, a perception task model has different effective perception distance ranges for objects of different types, while effective perception for objects of one type at a plurality of distance ranges may be covered by a plurality of perception task models, which thereby enables to implement perception recall for object within the full distance range in combination with the perception task models for the different distance ranges corresponding respectively to the wide-angle image and the narrow-angle image, greatly improving a recall rate and precision of perception for a distant-range object while guaranteeing a recall rate and precision of perception for a close-range object.

Step 203, Determining an object perception result based on the first perception results corresponding to distance ranges

After the first perception results corresponding respectively to the distance ranges are obtained, the object perception result may be determined based on the first perception results corresponding respectively to the distance ranges. For example, a forward-view perception result for the vehicle is obtained based on a forward-view wide-angle perception result and a forward-view narrow-angle perception result for the vehicle, such that the object perception result may include a perception result for each object within the full distance range. The full distance range refers to an entire distance range covered by the wide-angle image and the narrow-angle image. A distance may refer to a longitudinal distance to a camera (the wide-angle camera or the narrow-angle camera). In a vehicle forward-view perception scenario, a distance may refer to a longitudinal distance to ego vehicle.

Through the method for determining a perception result according to this embodiment, object perception within the different distance ranges is implemented based on the wide-angle image captured by the wide-angle camera and the narrow-angle image captured by the narrow-angle camera, in combination with the perception task models for the different distance ranges, to obtain first perception results corresponding respectively to the distance ranges, and then the object perception result is determined based on the first perception results for the distance ranges. As the wide-angle camera has a higher perception precision for a close-range object, and the narrow-angle camera has a higher perception precision for a distant-range object, close-range and distant-range objects within a full distance segment may be covered using the wide-angle image and the narrow-angle image, and then accurate recall for objects within a full distance range may be implemented in conjunction with perception task models for different distance ranges, where a recall rate for the distant-range object may be improved greatly while guaranteeing a recall rate for the close-range object. And, performing perception for objects within the different distance ranges by the perception task models for the different distance ranges may be independent of extraction of multi-scale features of a high-resolution image, thereby effectively lowering computing power for a perception task model and facilitating deployment of the model in a terminal.

FIG. 3 is a flowchart of a method for determining a perception result according to another exemplary embodiment of this disclosure.

In some optional embodiments, based on the embodiment shown in FIG. 2, as shown in FIG. 3, in step 202 of the determining, based on the first image, the second image, and perception task models corresponding to distance ranges, first perception results corresponding to distance ranges specifically may include steps as follows.

Step 2021, Determining, based on the first image and a perception task model for a first distance range corresponding to the first image, a wide-angle perception result corresponding to the first distance range

The first distance range may include at least one distance range corresponding respectively to one or more types of objects. Various first distance ranges and corresponding perception task models may be set according to an effective perception distance range of the wide-angle camera. For a same type of objects, a plurality of first distance ranges correspond respectively to different ranges of longitudinal distances of the type of objects relative to an ego vehicle, such as the range of 0 to 55 meters, the range of 55 to 110 meters, and the range of 110 to 220 meters as described above for another vehicle, where effective perception recall for another vehicle within the three distance ranges may be implemented respectively by perception task models for the three first distance ranges, which thereby enables to cover effective recall for the another vehicle in a range of 0 to 220 meters. A wide-angle effective perception range may differ for the different types of objects. For example, the range of 0 to 21 meters, the range of 21 to 43 meters, and the range of 43 to 87 meters may cover effective perception recall for a pedestrian or a cyclist within a range of 0 to 87 meters. This is mainly related to a correlation among sizes (dimensions) of the different types of objects, distances, and minimal pixels required for perception in the image. For example, for perception for objects at a same distance by a same camera, the greater the size of an object is, the easier the perception and recall is; while the smaller the size is, the more difficult the recall is. In actual application, a plurality of first distance ranges and perception task models corresponding respectively to the various first distance ranges may be set according to a performance parameter of a camera, a distance, and an actual physical size of an object. A wide-angle perception result corresponding to a first distance range includes perception results for respective objects perceived from an input image by a perception task model for the first distance range.

In some optional embodiments, the first image may be set to be an input image of a perception task model corresponding to any one of the first distance ranges, that is, perception processing may be performed on the first image by the perception task model, to obtain a wide-angle perception result corresponding to the any one of the first distance ranges.

In some optional embodiments, the first image may be preprocessed, and the preprocessed image may be set to be an input image of a perception task model corresponding to any one of the first distance ranges. Preprocessing may include at least one of scale transformation processing, cropping processing, etc. Scale transformation processing may be implemented by downsampling processing, that is, downsampling is performed on the first image to obtain an image of a lower scale, such as a 1/2 scale, a 1/4 scale, a 1/8 scale, etc., to reduce a size of the input image of the perception task model, improving perception processing efficiency. Cropping processing may be implemented by setting a cropping parameter according to effective distance ranges covered by different perception task models. For example, a perception task model is to cover a distance range of 0 to 55, then, the first image may be cropped to obtain a region in the first image that is occupied by the distance range of 0 to 55, and the region is set to be an input image of the perception task model. On one hand, effectiveness of the input image may be improved, helping improving accuracy of a perception result and perception precision of the model; and on the other hand, a size of the input image may be further reduced, lowering an amount of computation for the perception task model and further improving perception processing efficiency.

Step 2022, Determining, based on the second image and a perception task model for a second distance range corresponding to the second image, a narrow-angle perception result corresponding to the second distance range

The second distance range may include at least one distance range corresponding respectively to one or more objects. For a same type of objects, there are at least distances, in a second distance range, covered by some subranges and greater than distances covered by a first distance range. That is, distances covered by the second distance range may be overall greater than those covered by the first distance range, or the second distance range may overlap the first distance range. For example, in case the object is another vehicle, a wide-angle farthest first distance range is a range from 110 meters to 220 meters, and then, at least one second distance range may include a range of 134 meters to 551 meters or a range of 220 meters to 551 meters.

In some optional embodiments, the at least one second distance range may include one or more types of second distance ranges. For example, taking another vehicle as an example, one second distance range may include a range of 134 meters to 300 meters for another vehicle, and another second distance range may include a range of 300 meters to 600 meters for the another vehicle. A number of types of second distance ranges may be set according to an actual perception need, and is not limited in embodiments of this disclosure.

Step 2023, Determining, based on the wide-angle perception result corresponding to the first distance range and the narrow-angle perception result corresponding to the second distance range, the first perception results corresponding to distance ranges

After the at least one wide-angle perception result corresponding respectively to the at least one first distance range and the at least one narrow-angle perception result corresponding respectively to the at least one second distance range are obtained, a perception result corresponding to each distance range may be set to be a first perception result corresponding to the distance range. For example, a wide-angle perception result corresponding to a first distance range is set to be a first perception result corresponding to the first distance range, and a narrow-angle perception result corresponding to a second distance range is set to be a first perception result corresponding to the second distance range.

According to this embodiment, for the wide-angle camera, perception recall for an object in the wide-angle effective perception range is covered by the at least one perception task model for the at least one first distance range, and for the narrow-angle camera, a distant-range object is perceived effectively by the at least one perception task model for the at least one second distance range, as a supplement to the at least one wide-angle perception result, where on one hand, perception recall for the distant-range object is effectively improved, and on the other hand, perception for objects within different distance ranges by a plurality of perception task models may be performed independent of extraction of multi-scale features of a high-resolution image, thereby greatly lowering complexity of a network structure of a perception task model, lowering the computing power needed by the model, facilitating deployment of the model in a terminal.

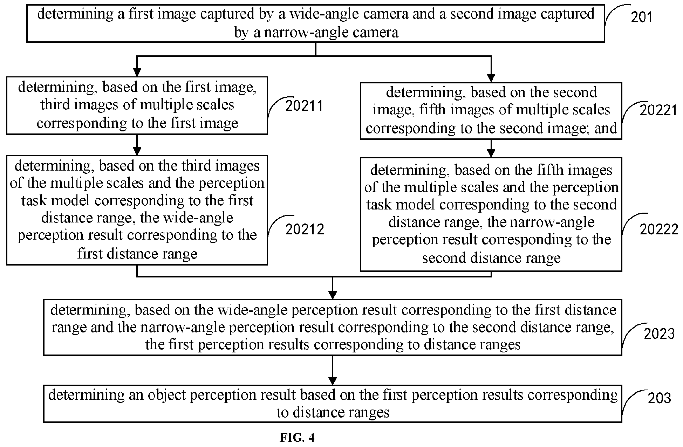

FIG. 4 is a flowchart of a method for determining a perception result according to yet another exemplary embodiment of this disclosure.

In some optional embodiments, based on the embodiment shown in FIG. 3, as shown in FIG. 4, in step 2021 of the determining, based on the first image and a perception task model for a first distance range corresponding to the first image, a wide-angle perception result corresponding to the first distance range may include steps as follows.

Step 20211, Determining, based on the first image, third images of multiple scales corresponding to the first image

The multiple scales may refer to multiple different resolutions. That is, different scales correspond to the different resolutions. The third images of the multiple scales may include at least two of an original-scale (which also may be expressed as a 1/1 scale) image of the first image, a 1/2-scale image of the first image, a 1/4-scale image of the first image, and a 1/8-scale image of the first image, etc. The 1/2-scale image of the first image refers to an image whose height and width are both 1/2 of the first image. The 1/4-scale image of the first image refers to an image whose height and width are both 1/4 of the first image. The 1/8-scale image of the first image refers to an image whose height and width are both 1/8 of the first image. Taking the 1/4-scale image as an example, a resolution of the first image is expressed as H*W, then, the 1/4-scale image of the first image has a resolution of (H/4)*(W/4). Exemplarily, the resolution of the first image is 2160*3840, then, the 1/4-scale image of the first image is of a resolution 540*960.

In some optional embodiments, among the third images of the multiple scales, the third images other than the third image of the original scale may be obtained by downsampling the first image or by processing the first image in any other mode, specifics of which are not limited.

Step 20212, Determining, based on the third images of the multiple scales and the perception task model corresponding to the first distance range, the wide-angle perception result corresponding to the first distance range.

Third images of different scales may be used for perception task models corresponding respectively to different first distance ranges. Images of different scales of a same image may contain features of an object at different levels. Perception effects of an image of a same scale for objects of different sizes are different. For example, the greater a scale is, the greater a resolution is, and the clearer an object in an image is; and otherwise, the fuzzier the object is. Based on this, a scale corresponding to a perception task model may be set based on the computing power needed by the model in combination with a case of object perception within a distance range of the model to cover. For example, for a perception task model for a close range, an object within the close range may generally occupy a greater region in the image, and may be effectively recalled even if an image of a small scale is used. Therefore, in consideration of the computing power needed by the perception task model, for the perception task model for the close range, an image of a smaller scale may be obtained by sampling and set to be an input image, to lower an amount of computation for the model.

According to this embodiment, object perception in first distance ranges is implemented using the images of the multiple scales corresponding to the first image and perception task models for the different first distance ranges. Images of different scales may be used as input images of the perception task models for the different first distance ranges, where an amount of computation for the perception task model may be lowered as a scale of an input image of a perception task model is reduced, and thereby efficiency of perception by the model may be further improved.

In some optional embodiments, in step 20212 of the determining, based on the third images of the multiple scales and the perception task model corresponding to the first distance range, the wide-angle perception result corresponding to the first distance range may include:

determining a target scale and a cropping parameter corresponding to a target distance range, where any one of the first distance ranges is used as the target distance range, and different cropping parameters correspond to different distance ranges; determining a first target image from the third images based on the target scale; determining a fourth image based on the cropping parameter and the first target image; and performing perception processing on the fourth image based on the perception task model corresponding to the target distance range, to obtain the wide-angle perception result corresponding to the target distance range.

The target scale (which may be referred to as a first target scale, so as to be distinguished from a target scale in a narrow-angle case) corresponding to the target distance range (which may be referred to as a first target distance range, so as to be distinguished from a target distance range in the narrow-angle case) refers to a scale of a third image needed by an input image of the perception task model corresponding to the target distance range. That is, a third image of the target scale of the multiple scales is used to determine the input image of the perception task model for the target distance range. For example, the third image of the target scale is set to be the input image of the perception task model for the target distance range; or the third image of the target scale is cropped, and a cropped region is set to be the input image. The cropping parameter corresponding to the target distance range is a parameter needed for cropping the third image of the target scale. The cropping parameter corresponding to the target distance range may include a parameter for determining the cropped region, such as a parameter for determining a boundary of the cropped region. Different cropping parameters correspond to different distance ranges. A specific correspondence may be preset according to a size of a region in an image occupied by an actual distance range, and stored. The wide-angle perception result corresponding to the target distance range is referred to as a wide-angle perception result as it is a perception result obtained by performing perception based on the wide-angle image.

In some optional embodiments, a target scale corresponding to a first distance range may be preset, and a correspondence between the first distance range and the target scale is stored. In use, the target scale corresponding to the target distance range may be determined according to the correspondence. For example, a target scale corresponding to a first distance range *a* is the 1/4 scale, a target scale corresponding to a first distance range *b* is 1/2, a target scale corresponding to a first distance range c is 1/1, etc.

In some optional embodiments, after the target scale and the cropping parameter corresponding to the target distance range are determined, the first target image may be determined from the third images based on the target scale. That is, among the third images of the multiple scales, a third image of a scale same as the target scale is set to be the first target image. For example, the target scale is the 1/2 scale, and then, a third image of the 1/2 scale is set to be the first target image.

In some optional embodiments, the first target image may be cropped based on the cropping parameter, to obtain the fourth image.

In some optional embodiments, the perception task model corresponding to the target distance range may be a multi-task perception model, a single-task perception model, etc., with a specific perception task model thereof not being limited. A multi-task perception model refers to a model by which multi-object perception and /or a plurality of perception results may be implemented at the same time. The plurality of objects for example may include at least two of a curb, a lane line, another vehicle, a cyclist, a pedestrian, a traffic light, a traffic cone, etc. The plurality of perception results for example may include an object detection result, a semantic segmentation result, etc.

According to this embodiment, the first image is downscaled and cropped, to obtain the input image of the perception task model, which enables to greatly reduce an amount of data of the input image, and thereby to effectively lower an amount of computation for the model, which helps further improve perception processing efficiency, and better helps deploy the model in a terminal.

In some optional embodiments, based on the embodiment shown in FIG. 3, as shown in FIG. 4, in step 2022 of the determining, based on the second image and a perception task model for a second distance range corresponding to the second image, a narrow-angle perception result corresponding to the second distance range may include steps as follows.

Step 20221, Determining, based on the second image, fifth images of multiple scales corresponding to the second image

The fifth image of the multiple scales may include at least two of an original-scale image of the second image, a 1/2-scale image of the second image, a 1/4-scale image of the second image, and a 1/8-scale image of the second image, etc. A specific operation in determining the fifth images of the multiple scales corresponding to the second image is similar to that in determining the third images according to an embodiment described above, description of which is not repeated here.

Step 20222, Determining, based on the fifth images of the multiple scales and the perception task model corresponding to the second distance range, the narrow-angle perception result corresponding to the second distance range

Fifth images of different scales may be used for perception task models corresponding respectively to different second distance ranges. Specifically, the scales corresponding respectively to the second distance ranges may be determined according to a case of perceiving, by the narrow-angle camera, objects within the different second distance ranges, combining the computing power needed by the perception task models, and respective effective perception distance ranges the perception task models are to cover. A specific operation in determining the at least one narrow-angle perception result corresponding respectively to the at least one second distance range is similar to that in determining a wide-angle perception result according to a foregoing embodiment, and is not elaborated here.

According to this embodiment, object perception in second distance ranges is implemented using the images of the multiple scales corresponding to the second image and perception task models for the different second distance ranges, such that images of different scales may be used as input images of the perception task models for the different second distance ranges, effectively reducing a scale of an input image of a perception task model, which thereby enables to lower an amount of computation for the perception task model, and to further improve efficiency of perception with the model.

In some optional embodiments, in step 20222 of the determining, based on the fifth images of the multiple scales and the perception task model corresponding to the second distance range, the narrow-angle perception result corresponding to the second distance range includes: determining a target scale and a cropping parameter corresponding to a target distance range, where any one of the second distance ranges is used as the target distance range, and different cropping parameters correspond to different distance ranges; determining a second target image from the fifth images based on the target scale; determining a sixth image based on the cropping parameter and the second target image; and performing perception processing on the sixth image based on the perception task model corresponding to the target distance range, to obtain the narrow-angle perception result corresponding to the target distance range.

The target scale (which may be referred to as a second target scale) corresponding to the target distance range (which may be referred to as a second target distance range) refers to a scale of a fifth image needed by an input image of the perception task model corresponding to the target distance range. That is, a fifth image of the target scale of the multiple scales is used to determine the input image of the perception task model for the target distance range. For example, the fifth image of the target scale is set to be the input image of the perception task model for the target distance range; or the fifth image of the target scale is cropped, and a cropped region is set to be the input image. The cropping parameter corresponding to the target distance range is a parameter needed for cropping the fifth image of the target scale. The cropping parameter corresponding to the target distance range may include a parameter for determining the cropped region, such as a parameter for determining a boundary of the cropped region. Different cropping parameters correspond to different second distance ranges. A specific correspondence may be preset according to a size of a region in an image occupied by an actual second distance range, and stored. The narrow-angle perception result corresponding to the target distance range is referred to as a narrow-angle perception result as it is a perception result obtained by performing perception based on the narrow-angle image.

In some optional embodiments, a target scale corresponding to a second distance range may be preset, and a correspondence between a second distance range and a target scale is stored. In use, the target scale corresponding to the target distance range may be determined according to the correspondence. For example, a target scale corresponding to a second distance range g is the 1/4 scale, a target scale corresponding to a second distance range h is 1/2, a target scale corresponding to a second distance range t is 1/1, etc.

In some optional embodiments, after the target scale and the cropping parameter corresponding to the target distance range are determined, the second target image may be determined from the fifth images based on the target scale. That is, among the fifth images of the multiple scales, a fifth image of a scale same as the target scale is set to be the second target image. For example, the target scale is the 1/2 scale. Then, a fifth image of the 1/2 scale is set to be the second target image.

In some optional embodiments, the second target image may be cropped based on the cropping parameter, to obtain the sixth image.

In some optional embodiments, the perception task model corresponding to the target distance range may be a multi-task perception model, a single-task perception model, etc., where a specific perception task model thereof not being limited.

According to this embodiment, the second image is downscaled and cropped, to obtain the input image of the perception task model, which enables to greatly reduce an amount of data of the input image, and thereby to effectively lower an amount of computation for the model, which helps further improve perception processing efficiency, and better helps deployment of the model in a terminal.

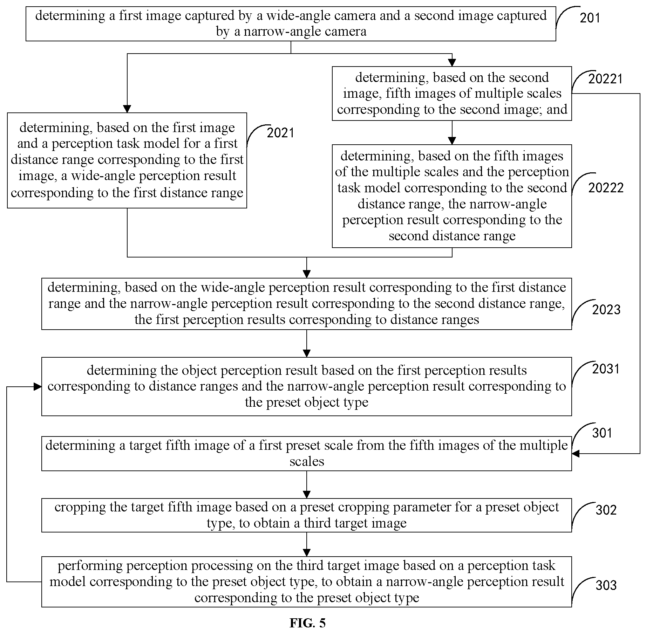

FIG. 5 is a flowchart of a method for determining a perception result according to still another exemplary embodiment of this disclosure.

In some optional embodiments, as shown in FIG. 5, the method according to embodiments of this disclosure further may include steps as follows.

Step 301, Determining a target fifth image of a first preset scale from the fifth images of the multiple scales

The first preset scale may be preset according to a need for perception for a preset object type. The preset object type may be any object type. For example, the preset object type may be a traffic light, a lane line, etc. Identical or different first preset scales may be set for different preset object types. Exemplarily, the preset object type is a traffic light, and the first preset scale is the 1/2 scale. Alternatively, the preset object type is a lane line, and the first preset scale is the 1/4 scale. Here it is just for illustration, rather than limiting embodiments of this disclosure. A fifth image of the first preset scale among the fifth images of the multiple scales is set to be the target fifth image.

Step 302, Cropping the target fifth image based on a preset cropping parameter for a preset object type, to obtain a third target image

The preset object type may be set according to an actual perception need. For example, the preset object type is a traffic light, a lane line, etc. The preset cropping parameter for the preset object type may be set according to a distance range needed for perceiving the preset object type. For example, if a perception goal for the preset object type is to improve recall rate for a distant-range object, the preset cropping parameter for the preset object type is set to enable to obtain, through cropping, a region in the target fifth image that corresponds to a distant range. If the perception goal for the preset object type is to compensate for an issue of missing a close-range lane line when using a perception task model for a second distance range, the preset cropping parameter enables to obtain, through cropping, a region in the target fifth image that corresponds to a close range. The target fifth image is cropped according to the preset cropping parameter for the preset object type to obtain a corresponding region, as the third target image.

Step 303, Performing perception processing on the third target image based on a perception task model corresponding to the preset object type, to obtain a narrow-angle perception result corresponding to the preset object type

The perception task model corresponding to the preset object type is a model dedicated to perceiving an object of the preset object type. For example, the perception task model for the preset object type may be a narrow-angle lane line perception model for perceiving the close-range lane line, a narrow-angle traffic light perception model for perceiving a distant traffic light, etc., specifics of which are not limited. Inference is performed on the third target image based on the perception task model, and the narrow-angle perception result corresponding to the preset object type is obtained according to an inference result. The narrow-angle perception result corresponding to the preset object type may include for example at least one perception result of an object detection result and a semantic segmentation result corresponding to a perceived object of a preset object type, etc.

In some optional embodiments, there may be one or more preset object types. For example, two preset object types, such as, a traffic light and a lane line, may be set. Each of the preset object types corresponds to a perception task model for implementing a perception task for an object of the preset type.

In step 203 of the determining an object perception result based on the first perception results corresponding to distance ranges may include a step as follows.

Step 2031, Determining the object perception result based on the first perception results corresponding to distance ranges and the narrow-angle perception result corresponding to the preset object type

The object perception result may be obtained based on the first perception results corresponding to distance ranges and the narrow-angle perception result corresponding to the preset object type.

In some optional embodiments, fusion may be performed on the first perception results for the distance ranges and the narrow-angle perception result corresponding to the preset object type, to obtain the object perception result. A fusion process may include coordinate system transformation, deduplication of perception results for a repeatedly perceived object, collection of non-repeated objects, splicing and fusion of a distance-ranges-spanning object (i.e., an object located across a plurality of distance ranges due to its greater size, such as a lane line and a curb), etc. A goal of coordinate system transformation is to unify a wide-angle perception result and a narrow-angle perception result to a same coordinate system, for object matching determination, and determining whether an object is repeatedly perceived. For a repeatedly perceived object, if the object is completely in the narrow-angle perception result, the narrow-angle perception result is set to be an object perception result for the object, and a wide-angle perception result for the object is deleted.

In some optional embodiments, perception results obtained by perception task models for different distance ranges are explicitly divided into distance segments, and thus deduplication therefor is not required; and deduplication processing is performed on perception results obtained by perception task models for overlapping distance ranges.

In some optional embodiments, if different perception task models are used to perceive different objects, deduplication is not necessary. For example, one perception task model is used to perceive another vehicle, a cyclist, and a pedestrian, while another perception task model is used to perceive a curb and a lane line. Then, no deduplication is required for perception results obtained using the two perception task models. A specific fusion mode may be set as needed, and is not limited in embodiments of this disclosure.

According to this embodiment, a specific cropping parameter may be set for a specific object type, for implementing perception for an object of the specific object type, as a supplement to a narrow-angle perception result for a second distance range, compensating for a defect of the narrow-angle perception result, and improving effectiveness and reliability of a perception result. For example, by a narrow-angle traffic light perception task model, perception processing is performed on a narrow-angle image of the distant range obtained by cropping, to improve recall rate for a distant traffic light. By a narrow-angle lane line perception task model, perception processing is performed on a narrow-angle image of the close range obtained by cropping, to compensate for a defect of easily missing the close-range lane line in the narrow-angle perception result for the second distance range, to improve recall rate for narrow-angle perception for the close-range lane line.

In some optional embodiments, in step 302 of the cropping the target fifth image based on a preset cropping parameter for a preset object type, to obtain a third target image may include: determining a vanishing point pixel coordinate in the target fifth image; and cropping the target fifth image based on the preset cropping parameter by centering on the vanishing point pixel coordinate, to obtain the third target image.

The vanishing point pixel coordinate in the target fifth image may be determined according to a calibration parameter of the narrow-angle camera. For example, the calibration parameter of the narrow-angle camera includes a vanishing point pixel coordinate in the second image captured by the narrow-angle camera, and the vanishing point pixel coordinate in the target fifth image is determined according to a pixel mapping relation between the target fifth image and the second image. Alternatively, vanishing point pixel coordinates in the fifth images of the multiple scales may be pre-calculated according to pixel mapping relations between the second image and the fifth images of the multiple scales and a calibrated vanishing point pixel coordinate, and stored. Then, in use, the vanishing point pixel coordinate in the target fifth image may be obtained directly from a storage region. The preset cropping parameter may include amounts of cropping in a negative x direction, a negative y direction, a positive x direction, and a positive y direction relative to the vanishing point pixel coordinate. For example, the preset cropping parameter may be expressed as [s1,s2,s3,s4], and a cropped region may be expressed as [xo- s1,yo-s2,xo+s3,yo+s4], or the preset cropping parameter carries a directional symbol, for example, s1=-450; then, the cropped region may be expressed as [xo+ s1,yo+s2,xo+s3,yo+s4]. A specific expression of the preset cropping parameter is not limited.

According to this embodiment, cropping is performed according to a preset cropping parameter based on a vanishing point in an image, to obtain an input image of a corresponding perception task model. As the vanishing point represents a visual intersection point of parallel lines, a distance range that can be covered by a cropped region may be controlled effectively based on the vanishing point and the cropping parameter, which thereby enables a cropped image to better meet a perception distance range to be covered by the perception task model, improving effectiveness of the input image of the perception task model, thereby improving accuracy of a perception result obtained by the perception task model and recall rate for an object in the corresponding distance range.

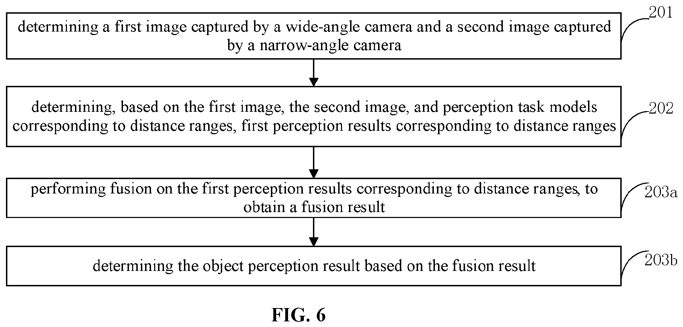

FIG. 6 is a flowchart of a method for determining a perception result according to yet another exemplary embodiment of this disclosure.

In some optional embodiments, based on the embodiment shown in FIG. 2, in step 203 of the determining an object perception result based on the first perception results corresponding to distance ranges may include steps as follows.

Step 203a, Performing fusion on the first perception results corresponding to distance ranges, to obtain a fusion result

Step 203b, Determining the object perception result based on the fusion result

For a specific principle of operations of step 203a and step 203b, reference may be made to the foregoing step 2031 with a difference lying in that this embodiment may not contain a narrow-angle perception result corresponding to a preset object type.

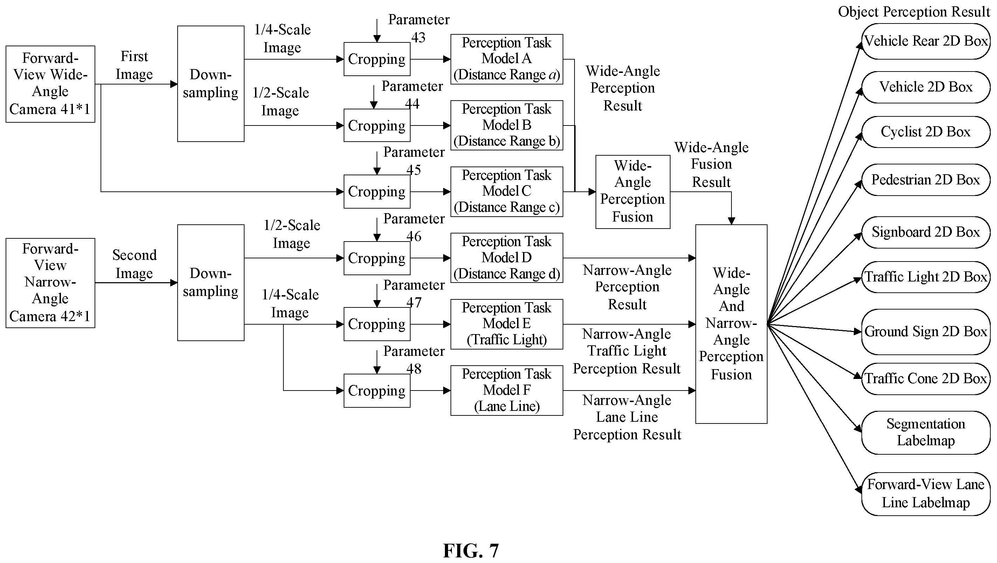

In some optional embodiments, FIG. 7 is a flowchart of determining a perception result according to an exemplary embodiment of this disclosure. As shown in FIG. 7, the wide-angle camera is a forward-view wide-angle camera 41, and *1 represents that there is 1 wide-angle camera; and the narrow-angle camera is a forward-view narrow-angle camera 42, with a number of narrow-angle camera also being 1. The forward-view wide-angle camera 41 captures a first image, and the first image is downsampled to obtain third images of multiple scales, where the third images of the multiple scales include a 1/2-scale image and a 1/4-scale image. The third images of the multiple scales further may include an original-scale image of the first image. A perception task model A, a perception task model B, and a perception task model C are perception task models corresponding respectively to a distance range *a,* a distance range *b,* and a distance range *c*. The perception task model A, the perception task model B, and the perception task model C each may be a multi-task model, i.e., capable of perceiving a plurality of different objects at the same time to obtain at least one perception result for each of the objects. The different objects are for example a vehicle, a vehicle rear, a pedestrian, a cyclist, a signboard, a traffic light, and a ground marker. The at least one perception result may for example include an object detection result and a semantic segmentation result. The 1/4-scale image is cropped based on a cropping parameter 43 to obtain a corresponding region (i.e., a fourth image), and perception processing is performed on the cropped region by the perception task model A, to obtain a wide-angle perception result corresponding to the distance range *a*. The 1/2-scale image is cropped based on a cropping parameter 44 to obtain a corresponding region (i.e., a fourth image), and perception processing is performed on the cropped region by the perception task model B, to obtain a wide-angle perception result corresponding to the distance range *b*. The original-scale first image is cropped based on a cropping parameter 45 to obtain a corresponding region (i.e., a fourth image), and perception processing is performed on the cropped region by the perception task model C, to obtain a wide-angle perception result corresponding to the distance range *c*. Wide-angle perception fusion is performed on the wide-angle perception results for the distance ranges, to obtain a wide-angle fusion result. Optionally, for the perception task model A, alternatively, the 1/4-scale image is not cropped, and perception processing is performed directly on the 1/4-scale image by the perception task model A, to obtain a wide-angle perception result corresponding to the distance range *a*.

The forward-view narrow-angle camera 42 captures a second image, and the second image is downsampled to obtain fifth images of multiple scales, where the fifth images of the multiple scales include a 1/2-scale image and a 1/4-scale image. The 1/2-scale image is cropped based on a cropping parameter 46 to obtain a corresponding region (i.e., a sixth image), and perception processing is performed on the cropped region by a perception task model D, to obtain a narrow-angle perception result corresponding to a distance range *d*. The perception task model D is a perception task model corresponding to the distance range *d*. The perception task model D may be a multi-task model. A preset object type includes a traffic light and a lane line. The traffic light corresponds to a perception task model E, and the lane line corresponds to a perception task model F. That is, the perception task model E is a traffic light single-task perception model, and the perception task model F is a lane line single-task perception model. The 1/4-scale image is cropped based on a cropping parameter 47 to obtain a corresponding region, and traffic light perception processing is performed on the cropped region by the perception task model E, to obtain a narrow-angle traffic light perception result. The 1/4-scale image is cropped based on a cropping parameter 48 to obtain a corresponding region, and lane line perception processing is performed on the cropped region by the perception task model F, to obtain a narrow-angle lane line perception result. The wide-angle fusion result, the narrow-angle perception result, the narrow-angle traffic light perception result, and the narrow-angle lane line perception result may be fused, to obtain a final object perception result. As shown in the figure, the object perception result includes object detection results and semantic segmentation results for the respective objects. An object detection result may include a two-dimensional (2D) bounding box for an object (2D Boxes for respective objects as shown in the figure). A semantic segmentation result may include a probability that respective pixels in an image belong to the object, or a set of pixel points in the image that belong to the object, or a classification label that each of the pixels in the image belongs to the respective objects. Specific content of a perception result is not limited. A segmentation LabelMap is the semantic segmentation result, and is expressed as a pixel classification label map, where a pixel may correspond to a classification label, representing an object type the pixel belongs to, that is, the LabelMap includes semantic segmentation results corresponding to respective perceived objects. A forward-view lane line LabelMap represents a semantic segmentation result for a lane line.

Different perception task models may correspond to different cropping parameters. That is, the parameter 43 to the parameter 48 may be different parameters, such that a cropped region may better meet perception requirements o a perception task model, e.g., to cover different distance ranges, meet perception characteristics of a traffic light and a lane line, etc., which enables to improve accuracy and precision of a perception result obtained by the perception task model. FIG. 7 is just an exemplary implementation of this disclosure, and it is not limited to the implementation in FIG. 7 in actual application. For example, for narrow-angle perception, FIG. 7 displays just the perception task model D for one distance range (i.e., the distance range *d*). In actual application, a plurality of distance ranges further may be set for narrow-angle perception. As another example, an image scale on which a perception task model is based is not limited to the scales in FIG. 7.

In some optional embodiments, the narrow-angle perception task model D may serve as a further enhancement to a forward-view wide-angle perception model, and may include 2D detection multitask; semantic segmentation task, for five types of objects, such as, a full vehicle, a vehicle rear, a pedestrian, a cyclist, and a traffic cone; and a lane line semantic segmentation task.

In some optional embodiments, the distance ranges corresponding to the perception task models for the corresponding distance ranges are as shown in Table 1 as follows.

**Table 1**

| | Vehicle | Pedestrian /Cyclist | Traffic light | Signboard | Traffic cone | Ground sign |
|---|---|---|---|---|---|---|
| Actual Physical Size (m) | 1.85 | 1.7 | 0.6 | 0.8 | 0.73 | 0.9 |
| Perception Task Model A | <50 m | <20 m | <30 m | <20 m | <20 m | <20 m |
| Perception Task Model B | 50-100 m | 20-50 m | 30-60 m | 15-40 m | 20-40 m | 20-40 m |
| Perception Task Model C | 100-200 m | 40-90 m | 50-150 m | 30-80 m | 30-70 m | 40-80 m |
| Perception Task Model D | 100-600 m | 60-200 m | 60-300 m | 50-200 m | 50-180 m | 30-240 m |

An actual physical size refers to an actual size of an object. Effective perception distance ranges within which different objects are perceived effectively by a perception task model may be calculated according to actual physical sizes, and minimal pixels required for perception, of the objects. As actual sizes of different objects may differ, and minimal pixels required for perception for different objects may differ, effective perception distance ranges within which different objects are perceived effectively using the same perception task model may differ. Table 1 is just an exemplary range description. In actual application, distance ranges within which different objects by a perception task model are not limited to the specific ranges in Table 1.

In some optional embodiments, the same network structure may be used for the perception task model D, the perception task model E, and the perception task model F, to reduce a model training cost. For example, a vargnet may be used as a backbone network, and a unet may be used as a neck network. Of course, this is just a possible implementation, rather than a limitation to the method according to embodiments of this disclosure. In actual application, different network structures may also be used for respective perception task models, with a specific network structure also not being limited to the vargnet and the unet as described above.

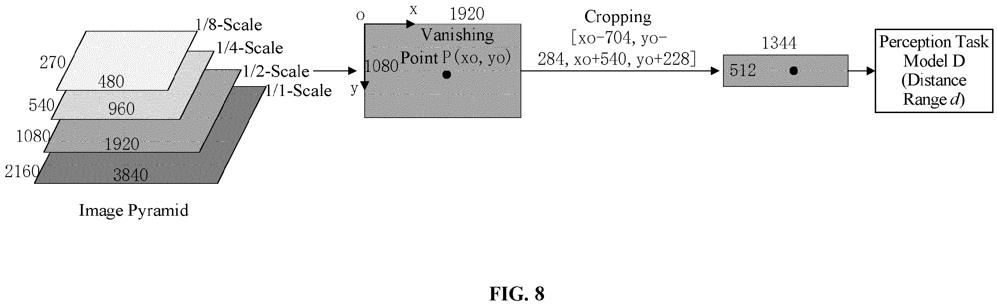

In some optional embodiments, based on the embodiment shown in FIG. 7, FIG. 8 is a schematic diagram illustrating a principle for cropping an input image corresponding to a perception task model D according to an exemplary embodiment of this disclosure. As shown in FIG. 8, the fifth images (i.e., an image pyramid) of the multiple scales corresponding to the second image include the original-scale (the 1/1 scale) image (H*W=2160*3840 is taken as an example in the figure, with H being the height of the image, and W being the width of the image), the 1/2-scale image (i.e., with the height and the width respectively being 1/2 of the original scale), the 1/4-scale image (i.e., with the height and the width respectively being 1/4 of the original scale), and a 1/8 scale image (i.e., with the height and the width respectively being 1/8 of the original scale). The perception task model D is a narrow-angle multi-task perception model. A target scale corresponding to the distance range *d* is the 1/2 scale, xoy represents a pixel coordinate system for the image, and a pixel coordinate of a vanishing point P is expressed as (xo,yo). The 1/2-scale image (i.e., the second target image) is cropped based on the cropping parameter [s1,s2,s3,s4]=[-704,-284,540,228] corresponding to the distance range *d* by centering on the pixel coordinate (xo,yo) of the vanishing point, which is expressed as [xo-704,yo-284,xo+540,yo+228], to obtain a sixth image of 512*1344. Perception processing is performed on the sixth image based on the perception task model D, to obtain the narrow-angle perception result corresponding to the distance range *d.* As a further supplement to a wide-angle model, the narrow-angle multi-task perception task model D covers a more distant perception distance, and enables to effectively improve recall rate for a distant-range object.

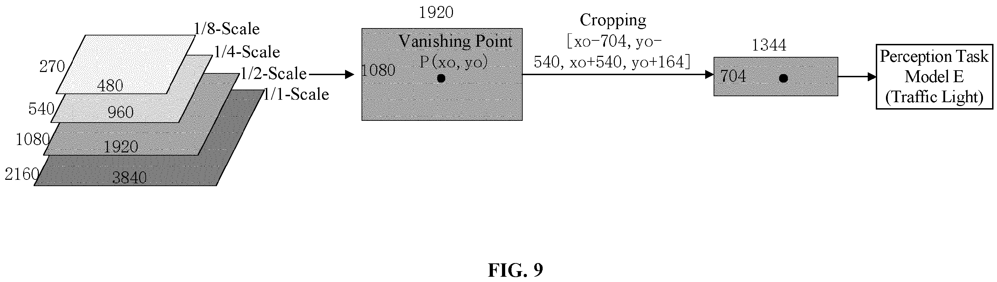

In some optional embodiments, based on the embodiment shown in FIG. 7, FIG. 9 is a schematic diagram illustrating a principle for cropping an input image corresponding to a perception task model E according to an exemplary embodiment of this disclosure. As shown in FIG. 9, the perception task model E is a narrow-angle traffic light single-task perception model. For a spatial-domain perception range for a traffic light, based on the computing power and a perception distance required by the perception task model, a first preset scale corresponding to the traffic light is set to be the 1/2 scale, and a corresponding preset cropping parameter is set to be [s1,s2,s3,s4]=[704,540,540,164]. Specifics of the principle for cropping are similar to those in relation to FIG. 8, description of which is not repeated here. Narrow-angle traffic light single-task perception enables to greatly improve perception recall for a distant traffic light.

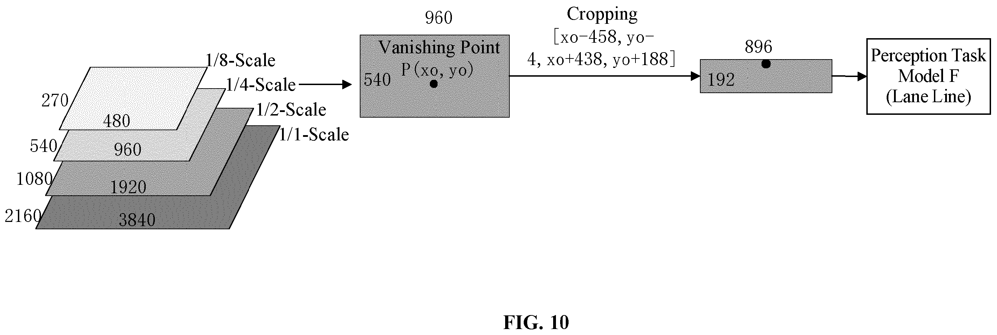

In some optional embodiments, based on the embodiment shown in FIG. 7, FIG. 10 is a schematic diagram illustrating a principle for cropping an input image corresponding to a perception task model F according to an exemplary embodiment of this disclosure. As shown in FIG. 10, the perception task model F is a lane line single-task perception model, with specifics of the principle for cropping being similar to those in relation to FIG. 9, except that a first preset scale corresponding to a lane line is the 1/4 scale, and that a preset cropping parameter is [s1,s2,s3,s4]=[458,4,438,188], description of which is not repeated. As a supplement to the narrow-angle multi-task perception model (perception task model D), the narrow-angle lane line single-task perception model (perception task model F) compensate for a defect of easily losing a nearby lane line by the narrow-angle multi-task perception model, improving completeness and accuracy of a lane line perception result.

Note that FIG. 8 to FIG. 10 are just for illustration. In actual application, a cropping parameter may be set as needed, and is not limited to a specific parameter value in the figures.

Respective embodiments of this disclosure may be implemented individually, or implemented in a mode of any combination as long as it causes no conflict, specifics of which may be set as needed, and are not limited in this disclosure.

Any one method for determining a perception result according to embodiments of this disclosure may be implemented by any appropriate device capable of data processing, including but not limited to a terminal device, a server, etc. Alternatively, the any one method for determining a perception result according to embodiments of this disclosure may be implemented by a processor. For example, the processor implements the any one method for determining a perception result mentioned in embodiments of this disclosure by calling respective instructions stored in a memory, which is not elaborated hereinafter.

### Exemplary Apparatus

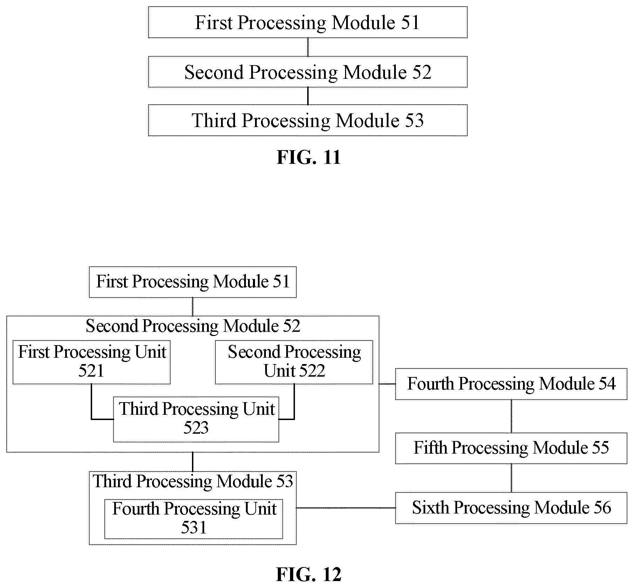

FIG. 11 is a schematic diagram illustrating a structure of an apparatus for determining a perception result according to an exemplary embodiment of this disclosure. The apparatus of the embodiment may be configured to implement the respective method embodiments of this disclosure. The apparatus as shown in FIG. 11 may include: a first processing module 51, a second processing module 52, and a third processing module 53.

The first processing module 51 is configured to determine a first image captured by a wide-angle camera and a second image captured by a narrow-angle camera, where a field of view (FOV) of the narrow-angle camera is smaller than a FOV of the wide-angle camera.

The second processing module 52 is configured to determine, based on the first image, the second image, and perception task models corresponding to distance ranges, first perception results corresponding to distance ranges.

The third processing module 53 is configured to determine an object perception result based on the first perception results corresponding to distance ranges.

FIG. 12 is a schematic diagram illustrating a structure of an apparatus for determining a perception result according to another exemplary embodiment of this disclosure.

In some optional embodiments, based on the embodiment shown in FIG. 11, as shown in FIG. 12, the second processing module 52 may include: a first processing unit 521, a second processing unit 522, and a third processing unit 523.

The first processing unit 521 is configured to determine, based on the first image and a perception task model for a first distance range corresponding to the first image, a wide-angle perception result corresponding to the first distance range.

The second processing unit 522 is configured to determine, based on the second image and a perception task model for a second distance range corresponding to the second image, a narrow-angle perception result corresponding to the second distance range.

The third processing unit 523 is configured to determine, based on the wide-angle perception result corresponding to the first distance range and the narrow-angle perception result corresponding to the second distance range, the first perception results corresponding to distance ranges.

In some optional embodiments, the first processing unit 521 specifically may be configured to: determine, based on the first image, third images of multiple scales corresponding to the first image; and determine, based on the third images of the multiple scales and the perception task model corresponding to the first distance range, the wide-angle perception result corresponding to the first distance range.

In some optional embodiments, the first processing unit 521 specifically may be configured to: determine a target scale and a cropping parameter corresponding to the target distance range, where any one of the first distance ranges is used as a target distance range, and different cropping parameters correspond to different distance ranges; determine a first target image from the third images based on the target scale; determine a fourth image based on the cropping parameter and the first target image; and perform perception processing on the fourth image based on the perception task model corresponding to the target distance range, to obtain the wide-angle perception result corresponding to the target distance range.

In some optional embodiments, the second processing unit 522 specifically may be configured to: determine, based on the second image, fifth images of multiple scales corresponding to the second image; and determine, based on the fifth images of the multiple scales and the perception task model corresponding to the second distance range, the narrow-angle perception result corresponding to the second distance range.

In some optional embodiments, the second processing unit 522 specifically may be configured to: set any one of the at least one second distance range to be a target distance range, and determine a target scale and a cropping parameter corresponding to the target distance range, where different cropping parameters correspond to different distance ranges; determine a second target image of the fifth images based on the target scale; determine a sixth image based on the cropping parameter and the second target image; and perform perception processing on the sixth image based on the perception task model corresponding to the target distance range, to obtain the narrow-angle perception result corresponding to the target distance range.

In some optional embodiments, as shown in FIG. 12, the apparatus according to embodiments of this disclosure further may include:
a fourth processing module 54, which is configured to determine a target fifth image of a first preset scale of the fifth images of the multiple scales;
a fifth processing module 55, which is configured to crop the target fifth image based on a preset cropping parameter for a preset object type, to obtain a third target image; and
a sixth processing module 56, which is configured to perform perception processing on the third target image based on a perception task model corresponding to the preset object type, to obtain a narrow-angle perception result corresponding to the preset object type.

The third processing module 53 may include: a fourth processing unit 531, which is configured to determine the object perception result based on the first perception results corresponding to distance ranges and the narrow-angle perception result corresponding to the preset object type.

In some optional embodiments, the fifth processing module 55 specifically may be configured to: determine a vanishing point pixel coordinate in the target fifth image; and crop the target fifth image based on the preset cropping parameter by centering on the vanishing point pixel coordinate, to obtain the third target image.

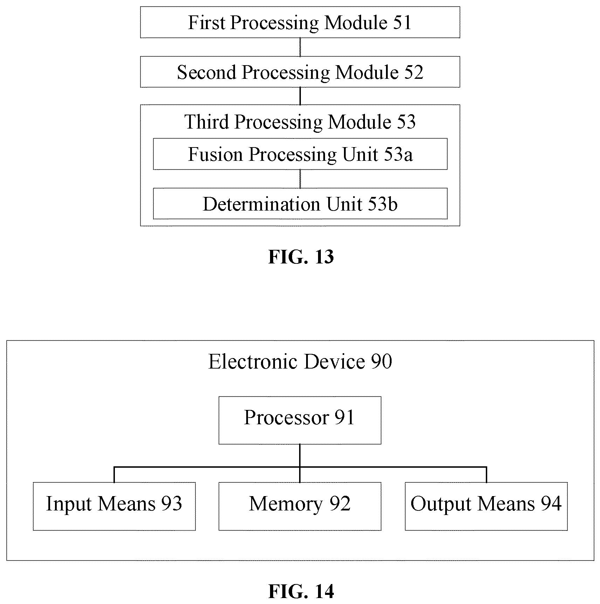

FIG. 13 is a schematic diagram illustrating a structure of an apparatus for determining a perception result according to yet another exemplary embodiment of this disclosure.

In some optional embodiments, based on the embodiment shown in FIG. 11, the third processing module 53 may include:
a fusion processing unit 53a, which is configured to perform fusion on the first perception results corresponding to distance ranges, to obtain a fusion result; and
a determination unit 53b, which is configured to determine the object perception result based on the fusion result.

For beneficial technical effects corresponding to the exemplary embodiments of this apparatus, one may refer to the respective beneficial technical effects in the "Exemplary Method" section described above, which are not repeated here.

### Exemplary Electronic Device

FIG. 14 is a diagram illustrating a structure of an electronic device according to embodiments of this disclosure, where the electronic device 90 includes at least a processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 91 may execute one or more of the program instructions to implement the method according to the various embodiments of this disclosure that are described above and/or other desired functions.

In an example, the electronic device 90 may further include an input means 93 and an output means 94. These components are connected to each other through a bus system and/or another form of connection mechanism (not shown).

The input means 93 may further include, for example, a keyboard and a mouse.

The output means 94 may output various information to the outside, and may include, for example, a display, a loudspeaker, a printer, a communication network, and a remote output means connected to the communication network.

Certainly, for simplicity, FIG. 14 shows only some of components in the electronic device 90 that are related to this disclosure, and components such as a bus and an input/output interface are omitted. In addition, according to specific application situations, the electronic device 90 may further include any other appropriate components.

### Exemplary computer program product and computer readable storage medium

In addition to the foregoing method and device, embodiments of this disclosure may also relate to a computer program product, which includes computer program instructions. When the instructions are run by a processor, the processor may perform the steps, of the method according to the embodiments of this disclosure, that are described in the "Exemplary Method" section of this specification.

The computer program product may be program code, written with one or any combination of a plurality of programming languages, which is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor may perform the steps, of the method according to the embodiments of this disclosure, that are described in the "Exemplary Method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for determining a perception result, **characterized by** comprising:
determining (201) a first image captured by a wide-angle camera and a second image captured by a narrow-angle camera, wherein a field of view (FOV) of the narrow-angle camera is smaller than a FOV of the wide-angle camera;
determining (202), based on the first image, the second image, and perception task models corresponding to distance ranges, first perception results corresponding to distance ranges; and
determining (203) an object perception result based on the first perception results corresponding to distance ranges.

2. The method according to claim 1, wherein the determining (202), based on the first image, the second image, and perception task models corresponding to distance ranges, first perception results corresponding to distance ranges comprises:
determining (2021), based on the first image and a perception task model for a first distance range corresponding to the first image, a wide-angle perception result corresponding to the first distance range;
determining (2022), based on the second image and a perception task model for a second distance range corresponding to the second image, a narrow-angle perception result corresponding to the second distance range; and
determining (2023), based on the wide-angle perception result corresponding to the first distance range and the narrow-angle perception result corresponding to the second distance range, the first perception results corresponding to distance ranges.

3. The method according to claim 2, wherein the determining (2021), based on the first image and a perception task model for a first distance range corresponding to the first image, a wide-angle perception result corresponding to the first distance range comprises:
determining (20211), based on the first image, third images of multiple scales corresponding to the first image; and
determining (20212), based on the third images of the multiple scales and the perception task model corresponding to the first distance range, the wide-angle perception result corresponding to the first distance range.

4. The method according to claim 3, wherein the determining (20212), based on the third images of the multiple scales and the perception task model corresponding to the first distance range, the wide-angle perception result corresponding to the first distance range comprises:
determining a target scale and a cropping parameter corresponding to a target distance range, wherein any one of the first distance ranges is used as the target distance range, and different cropping parameters correspond to different distance ranges;
determining a first target image from the third images based on the target scale;
determining a fourth image based on the cropping parameter and the first target image; and
performing perception processing on the fourth image based on the perception task model corresponding to the target distance range, to obtain the wide-angle perception result corresponding to the target distance range.

5. The method according to claim 2, wherein the determining (2022), based on the second image and a perception task model for a second distance range corresponding to the second image, a narrow-angle perception result corresponding to the second distance range comprises:
determining (20221), based on the second image, fifth images of multiple scales corresponding to the second image; and
determining (20222), based on the fifth images of the multiple scales and the perception task model corresponding to the second distance range, the narrow-angle perception result corresponding to the second distance range.

6. The method according to claim 5, wherein the determining (20222), based on the fifth images of the multiple scales and the perception task model corresponding to the second distance range, the narrow-angle perception result corresponding to the second distance range comprises:
determining a target scale and a cropping parameter corresponding to a target distance range, wherein any one of the second distances range is used as the target distance range, and different cropping parameters correspond to different distance ranges;
determining a second target image from the fifth images based on the target scale;
determining a sixth image based on the cropping parameter and the second target image; and
performing perception processing on the sixth image based on the perception task model corresponding to the target distance range, to obtain the narrow-angle perception result corresponding to the target distance range.

7. The method according to claim 5, further comprising:
determining (301) a target fifth image of a first preset scale from the fifth images of the multiple scales;
cropping (302) the target fifth image based on a preset cropping parameter for a preset object type, to obtain a third target image; and
performing (303) perception processing on the third target image based on a perception task model corresponding to the preset object type, to obtain a narrow-angle perception result corresponding to the preset object type,
wherein the determining (203) an object perception result based on the first perception results corresponding to distance ranges comprises:
determining (2031) the object perception result based on the first perception results corresponding to distance ranges and the narrow-angle perception result corresponding to the preset object type.

8. The method according to claim 7, wherein the cropping (302) the target fifth image based on a preset cropping parameter for a preset object type, to obtain a third target image comprises:
determining a vanishing point pixel coordinate in the target fifth image; and
cropping the target fifth image based on the preset cropping parameter by centering on the vanishing point pixel coordinate, to obtain the third target image.

9. The method according to any one of claims 1 to 8, wherein the determining (203) an object perception result based on the first perception results corresponding to distance ranges comprises:
performing (203a) fusion on the first perception results corresponding to distance ranges, to obtain a fusion result; and
determining (203b) the object perception result based on the fusion result.

10. An apparatus for determining a perception result, comprising:
a first processing module (51), configured to determine a first image captured by a wide-angle camera and a second image captured by a narrow-angle camera, wherein a field of view (FOV) of the narrow-angle camera is smaller than a FOV of the wide-angle camera;
a second processing module (52), configured to determine, based on the first image, the second image, and perception task models corresponding to distance ranges, first perception results corresponding to distance ranges; and
a third processing module (53), configured to determine an object perception result based on the first perception results corresponding to distance ranges.

11. The apparatus according to claim 10, wherein the second processing module (52) comprises:
a first processing unit (521), configured to determine, based on the first image and a perception task model for a first distance range corresponding to the first image, a wide-angle perception result corresponding to the first distance range;
a second processing unit (522), configured to determine, based on the second image and a perception task model for a second distance range corresponding to the second image, a narrow-angle perception result corresponding to the second distance range; and
a third processing unit (523), configured to determine, based on the wide-angle perception result corresponding to the first distance range and the narrow-angle perception result corresponding to the second distance range, the first perception results corresponding to distance ranges.

12. The apparatus according to claim 11, wherein the first processing unit (521) determines, based on the first image and a perception task model for a first distance range corresponding to the first image, a wide-angle perception result corresponding to the first distance range by:
determining, based on the first image, third images of multiple scales corresponding to the first image; and
determining, based on the third images of the multiple scales and the perception task model corresponding to the first distance range, the wide-angle perception result corresponding to the first distance range.

13. The apparatus according to any one of claims 1 to 8, wherein the third processing module (53) comprises:
a fusion processing unit (53a), configured to perform fusion on the first perception results corresponding to distance ranges, to obtain a fusion result; and
a determination unit (53b), configured to determine the object perception result based on the fusion result.

14. A non-transitory computer readable storage medium, on which a computer program is stored, **characterized by** that the computer program, when executed by a processor, causes the processor to implement the method according to any one of claims 1-9.

15. An electronic device, **characterized by** comprising:
a processor, and
a memory, configured to store processor-executable instructions, wherein
the processor is configured to read the executable instructions from the memory, and execute the instructions to implement the method according to any one of claims 1-9.
